(19) Europäisches Patentamt
European Patent Office
Office européen des brevets

(11) **EP 2 279 909 B1**

(12) **EUROPÄISCHE PATENTSCHRIFT**

(45) Veröffentlichungstag und Bekanntmachung des Hinweises auf die Patenterteilung:
**06.06.2012  Patentblatt 2012/23**

(51) Int Cl.:
*B60R 1/08* (2006.01)  *G02B 5/08* (2006.01)
*C03C 17/36* (2006.01)

(21) Anmeldenummer: **10007197.6**

(22) Anmeldetag: **17.05.2005**

(54) **Rückblickspiegel für Kraftfahrzeuge**

Rear view mirror for vehicles

Rétroviseur pour véhicules

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **02.02.2005  EP 05002130**

(43) Veröffentlichungstag der Anmeldung:
**02.02.2011  Patentblatt 2011/05**

(62) Dokumentnummer(n) der früheren Anmeldung(en) nach Art. 76 EPÜ:
**05010582.4 / 1 688 302**

(73) Patentinhaber: **Flabeg GmbH & Co. KG
90766 Fürth (DE)**

(72) Erfinder: **Höing, Thomas
93413 Cham (DE)**

(74) Vertreter: **Tergau & Walkenhorst
Patentanwälte - Rechtsanwälte
Eschersheimer Landstrasse 105-107
60322 Frankfurt/Main (DE)**

(56) Entgegenhaltungen:
**EP-A- 1 014 118      US-A- 6 142 642
US-B1- 6 514 620**

Bemerkungen:
Die Akte enthält technische Angaben, die nach dem Eingang der Anmeldung eingereicht wurden und die nicht in dieser Patentschrift enthalten sind.

EP 2 279 909 B1

**Beschreibung**

Die Erfindung betrifft einen Rückblickspiegel für Fahrzeuge, insbesondere Kraftfahrzeuge, mit einem Schichtträger und einer darauf rückseitig angebrachten Beschichtung, die eine reflektierende Spiegelschicht und eine zwischen dieser und dem Schichtträger angeordnete Zwischenschicht umfasst.

Bei der Herstellung von Rückblickspiegeln für Kraftfahrzeuge besteht üblicherweise das Bestreben, für eine gute Erkennbarkeit rückwärtiger Objekte einen besonders hohen Reflexionsgrad oder Reflexionswert des Spiegels zu erreichen. Dazu sind derartige Autospiegel üblicherweise auf der Basis eines hochtransparenten Substrat- oder Schichtträgermaterials hergestellt, das mit einer hochgradig reflektierenden Metallbeschichtung, beispielsweise aus Silber oder Aluminium, versehen ist. Bei gängigen Autospiegeln kann diese reflektierende Beschichtung rückseitig auf dem Schichtträger angebracht sein, so dass die Beschichtung durch den Schichtträger und die Spiegeleinfassung gegen direkte atmosphärische Einwirkungen, insbesondere Verschmutzungen, geschützt ist. Mit derartigen Spiegelsystemen sind im sichtbaren Spektralbereich Reflexionswerte von mehr als 85 % erreichbar. Andererseits besteht bei derartigen, hochwirksamen Rückspiegeln aber das Problem, dass derartig hohe Reflexionswerte zu einer Blendung des Fahrers bei Nachtfahrten durch die Scheinwerfer nachfolgender Fahrzeuge führen könnten.

Aus diesem Grund wurden sogenannte blendfreie Rückblickspiegel entwickelt, die die Blendung des Fahrers bei Nachtfahrten reduzieren sollten. Dazu können die Rückblickspiegel insbesondere farbig getönt sein. Im Hinblick auf die vorangegangene Entwicklung bei den Scheinwerfersystemen für Kraftfahrzeuge, bei denen sich Halogenscheinwerfer mehr und mehr durchsetzten, wurden dabei Blautönungen für Rückblickspiegel entwickelt. Ein derartiger Blautonspiegel reflektiert die Halogenscheinwerfer des rückwärtigen Verkehrs schwächer als Tageslicht, so dass nachts eine blendmindernde Wirkung auftritt. Zur Herstellung eines derartigen blendarmen Rückblickspiegels ist üblicherweise zwischen der reflektierenden Spiegelschicht und dem Schichtträger eine Zwischenschicht angeordnet, die die entsprechende Farbtönung des Spiegels gewährleisten soll. Dabei sind beispielsweise aus der DE 34 36 011 C1 Rückblickspiegel bekannt, bei denen diese Zwischenschichten als dielektrische Schichten in der Art von Interferenzsystemen ausgestaltet sind. Alternativ können als reflektierende Schichten auch Halbleiterschichten vorgesehen sein, die zur Farbgebung ebenfalls mit dielektrischen Schichten als Zwischenschicht kombiniert sein können.

Alternativ wurde zur Vermeidung oder Reduktion der Blendgefahr noch in Betracht gezogen, Metallspiegel in Kombination mit durchgefärbten Gläsern oder Folien herzustellen. Derartige Spiegel sind jedoch vergleichsweise aufwendig in Herstellung und Montage und haben sich daher als Rückblickspiegel im Kfz-Bereich nicht durchgesetzt. Ein weiterer alternativer Ansatz zur Herstellung geeigneter blendarmer Spiegel ist die Integration von Teilen mit variabler Transmission in den Spiegelaufbau, wobei insbesondere elektrisch schaltbare Komponenten in der Form elektrochromer Spiegel oder LCD-Spiegel in Betracht gezogen wurden. Auch diese Technologien sind jedoch mit erheblichem Aufwand verbunden, insbesondere im Hinblick auf die erforderlichen schaltungstechnischen Maßnahmen, die die erzielbaren niedrigen Reflexionswerte ausschließlich im konkreten Fall akuter Blendung gewährleisten sollen.

Aus den genannten Gründen sind gängige Rückblickspiegel für Kraftfahrzeuge daher unter Verwendung der genannten dielektrischen Zwischenschichten zwischen dem Schichtträger und der reflektierenden Spiegelschicht aufgebaut. Wie sich jedoch herausgestellt hat, erfüllen selbst derartige Spiegelsysteme zeitgemäße Anforderungen hinsichtlich des Abblendverhaltens nur begrenzt.

Über die Anforderungen der Blendarmut hinaus kann es aber auch aus anderen, beispielsweise gestalterischen, Gründen, wünschenswert sein, einen Rückblickspiegel mit einer vorgebbaren Tönung farbig auszugestalten.

Der Erfindung liegt daher die Aufgabe zugrunde, einen Spiegel anzugeben, der auch unter verschiedenen Blickwinkeln eine vorgegebene Farbtönung beibehält, und insbesondere einen Rückblickspiegel der genannten Art anzugeben, der auch im Hinblick auf moderne, hochgradige Anforderungen an seine Reflexionseigenschaften besonders zuverlässig für einen Einsatz für Kraftfahrzeuge geeignet ist.

Diese Aufgabe wird erfindungsgemäß durch einen Rückblickspiegel für Kraftfahrzeuge mit einem Schichtträger und einer darauf rückseitig angebrachten Beschichtung gelöst, wobei die eine auf dem Schichtträger angeordnete Zwischenschicht und eine darauf angeordnete reflektierende Spiegelschicht umfassende Beschichtung derart ausgestaltet ist, dass der Betrag des Parameters für die Farbigkeit C $C = \sqrt{a_0{}^2 + b_0{}^2}$ größer ist als 5, dass die infolge eines Verkippens des Rückblickspiegels vom senkrechten Beobachtungswinkel um 45° resultierende Farbänderung $\Delta E$ in Abhängigkeit vom Betrag des Farbwertes $a_0$ gemäß CIE nicht größer ist als

$\Delta E \leq 1/2 \cdot (|a_0|\text{-}8)$ für $a_0 \leq \text{-}20$,

$\Delta E \leq 6$ für $\text{-}20 \leq a_0 \leq 0$, und

$\Delta E \leq 1/2 \cdot (a_0 + 12)$ für $a_0 \geq 0$,

und dass der Reflexionsgrad R(A) bei Lichtart A mindestens 40 % beträgt.

Zur Definition wird dabei zurückgegriffen auf die für die quantitative und/oder qualitative Charakterisierung von Farbeigenschaften üblicherweise verwendeten, von der internationalen Beleuchtungskommission (commission internationale de l'eclairage CIE) vorgegebenen Farbkoordinaten L, a und b im sogenannten L a b-Farbraum. Die für den Rückblickspiegel charakteristischen Farbkoordinaten werden dabei einerseits bei senkrechtem Lichteinfall ($L_0$, $a_0$, $b_0$) auf den Rückblickspiegel und bei Lichteinfall unter einem Einfallwinkel von 45° ($L_{45}$, $a_{45}$, $b_{45}$) gemessen. Aus den dabei erhaltenen Messwerten werden die Differenzwerte nach den Beziehungen $\Delta L = L_{45} - L_0$, $\Delta a = a_{45} - a_0$ und $\Delta b = b_{45} - b_0$

ermittelt. Aus diesen Differenzwerten kann sodann anhand der Beziehung $\Delta E = \sqrt{\Delta L^2 + \Delta a^2 + \Delta b^2}$ die Zahl $\Delta E$ ermittelt werden, die ein quantitatives oder technisches Maß für die Änderung der Farbe des Rückblickspiegels infolge eines Verkippens des Rückblickspiegels vom senkrechten Beobachtungswinkel um 45° darstellt. Darüber hinaus kann aus diesen Daten nach der Beziehung $C = \sqrt{a_0^2 + b_0^2}$ ein für die Farbigkeit oder Buntheit charakteristischer Parameter ermittelt werden.

Die Erfindung geht von der Überlegung aus, dass ein auch hohen Anforderungen hinsichtlich der Einsetzbarkeit für Kraftfahrzeuge genügender Rückblickspiegel unter anderem zwei Kriterien erfüllen sollte. Einerseits sollte der Rückblickspiegel auch im Hinblick auf moderne Beleuchtungssysteme für Kraftfahrzeuge mit möglichst geeigneter Farbwahl, vorteilhafterweise im Hinblick auf Blendarmut, ausgestaltet werden können. Dabei sollte insbesondere berücksichtigt werden, dass die üblicherweise vorgenommene Blautonfärbung der Rückblickspiegel gerade im Hinblick auf die bei Kraftfahrzeugen verbreitete Halogenscheinwerfertechnik ausgerichtet war. Bei moderneren Kraftfahrzeug-Beleuchtungssystemen sind jedoch zunehmend neue Scheinwerfersysteme zum Einsatz gekommen, wie beispielsweise Entladungslampen (HID-Scheinwerfer) oder weiße LEDs. Diese Systeme weisen insbesondere die Eigenart auf, dass sich der Schwerpunkt des abgestrahlten Lichts zu kürzeren Wellenlängen, also in Richtung blau hin, verschiebt.

Die Blautonfärbung eines Rückblickspiegels wirkt bei derartigen Systemen somit nicht mehr blendmindernd, sondern geradezu blendverstärkend. Um dem Rechnung zu tragen, sollte der Rückblickspiegel von seiner Tönung her in Richtung grün oder vermehrt in Richtung rot ausgestaltet werden können und dafür mit einer hinreichenden Farbigkeit versehen sein. Andererseits sollte die Farbgebung und insbesondere die mit dieser erreichbare Blendarmut aber auch besonders an die vorgesehene Anwendung im Kraftfahrzeugbereich angepasst sein. Dabei sollte insbesondere berücksichtigt werden, dass die Farbgebung sich nicht nur bei senkrechtem Lichteinfall auf die Rückblickspiegel, sondern auch unter verschiedenen Lichteinfallswinkeln auswirken könnte. Dementsprechend sollte der Spiegel spezifisch dafür ausgelegt sein, seine Farbeigenschaften auch bei Lichteinfall aus verschiedenen Einfallswinkeln beizubehalten. Um diesen beiden Kriterien genüge zu tun, sollte einerseits der Betrag des a-Wertes im CIE-Lab-Farbraum ausreichend groß gewählt sein. Andererseits sollte der Kennwert für die aus einem Verkippen des Spiegels vom senkrechten Beobachtungswinkel um 45° resultierende Farbänderung ausreichend gering gehalten sein, so dass eine vorgegebene Farbtönung auch bei verschiedenen Blickwinkeln erhalten bleibt.

Der Rückblickspiegel ist dabei zudem auch im Hinblick auf seine charakteristischen Reflexionskennwerte gezielt für einen Einsatz im Kraftfahrzeugbereich hin ausgelegt. Um dabei eine insgesamt ausreichend hohe Reflexionswirkung sicherzustellen, beträgt der Reflexionsgrad R(A) bei Lichtart A mindestens 40 %. Um andererseits eine Blendung des Fahrers durch global zu hohe Reflexion zu vermeiden, beträgt der Reflexionsgrad R(A) bei Lichtart A in vorteilhafter Ausgestaltung höchstens 70 %.

Vorteilhafterweise weist der Rückblickspiegel eine rote Tönung auf. Dazu ist vorzugsweise der Farbwert $a_0 > 0$ gewählt.

Gerade im Hinblick auf die vorgesehene Anwendung im Kraftfahrzeugbereich ist es darüber hinaus wünschenswert, die mögliche Farbänderung auch absolut zu begrenzen. Dazu ist vorteilhafterweise die Farbänderung $\Delta E$ nicht größer als 18, in weiterer vorteilhafter Ausgestaltung nicht größer als 6.

Um die Einhaltung der angestrebten Parameter $\Delta E$ und a des Rückblickspiegels zuverlässig erreichen zu können, ist in einer Variante der Erfindung die Zwischenschicht des Rückblickspiegels aus Halbleitermaterial gebildet. Der Schichtaufbau des Rückblickspiegels ist somit durch Metall/Halbmetall/Glas gekennzeichnet, wobei der Beobachter auf die Glasseite blickt. Wie sich nämlich überraschend herausgestellt hat, ist mit den üblicherweise verwendeten Materialien oder Materialgruppen die nunmehr vorgesehene Auslegung des Schichtsystems zur Verschiebung der Tönung oder sogenannten Designwellenlänge von blau in Richtung grün oder sogar rot bei gleichzeitig nur geringer resultierender Farbänderung $\Delta E$ nicht erreichbar. Demgegenüber gelingt dies jedoch, indem die Zwischenschicht aus Halbleitermaterial gebildet ist. Vorzugsweise ist dabei als Halbleitermaterial Silizium, Germanium oder eine Mischung aus Silizium und Germanium vorgesehen.

Um die optischen Eigenschaften des Schichtsystems und somit des Rückblickspiegels insgesamt an die gewünschten Vorgaben besonders flexibel anpassen zu können, ist das Halbleitermaterial vorzugsweise mit Aluminium (Al), Bor (B), Stickstoff (N), Wasserstoff (H) und/oder Sauerstoff (O) versetzt.

Besonders günstige Eigenschaften im Hinblick auf den vorgesehenen Einsatzzweck des Rückblickspiegels sind erreichbar, indem die optische Schichtdicke, also das Produkt aus tatsächlicher Schichtdicke und dem Brechungsindex, des Halbleitermaterials vorteilhafterweise zwischen etwa 135 nm bis etwa 240 nm, alternativ vorteilhafterweise zwischen etwa 135 nm bis etwa 240 nm zuzüglich eines ganzzahligen Vielfachen von 275 nm, gewählt ist. Durch eine derartige Schichtdickenwahl ist der Rückblickspiegel in besonders vorteilhafter Weise an eine Design- oder Auslegungs-wellenlänge $\lambda$ von etwa 550 nm angepaßt, die etwa der Wellenlänge maximaler Hellempfindlichkeit des menschlichen Auges bei Tag (Hellsehen) entspricht. Überraschenderweise hat sich herausgestellt, dass gerade bei einer derartigen spektralen Auslegung des Schichtsystems eine besonders geringe Winkelabhängigkeit erreichbar ist. Durch die Wahl der Schichtdicke im genannten Dickenintervall ist dabei sichergestellt, dass die optische Schichtdicke im als besonders günstig erachteten Intervall zwischen $1,0 \times \lambda/4$ und $1,8 \times \lambda/4$, alternativ ggf. ausgelegt für die nächste Interferenzordnung, liegt.

Um darüber hinaus eine besonders flexible Anpassung der optischen Eigenschaften an eventuelle zusätzliche Vorgaben zu ermöglichen, ist die Zwischenschicht in zusätzlicher oder alternativer vorteilhafter Ausgestaltung ihrerseits mehrschichtig aus einer Anzahl von Halbleiterschichten aufgebaut. Dabei können insbesondere mehrere Halbleiterschichten mit unterschiedlichen optischen Eigenschaften kombiniert werden, um besonders bevorzugte oder gewünschte Effekte sicherzustellen. Alternativ oder zusätzlich umfasst die Zwischenschicht in vorteilhafter Ausgestaltung eine Anzahl dielektrischer Schichten. Dabei können insbesondere vor, hinter oder zwischen den jeweils halbleitenden Schichten ein oder zwei weitere dielektrische Schichten eingefügt sein, wobei deren optische Dicke vorteilhafterweise unterhalb von $0,9 \times \lambda/2$, vorzugsweise unterhalb von $0,6 \times \lambda/2$, alternativ ggf. ausgelegt für die nächste Interferenzordnung, (wobei $\lambda$ die Designwellenlänge spezifiziert) gewählt ist. Dazu weist die Gesamtheit der dielektrischen Schichten vorteilhafterweise eine optische Schichtdicke von weniger als 240 nm, vorzugsweise von weniger als 160 nm, alternativ vorteilhafterweise von weniger als 240 nm zuzüglich eines ganzzahligen Vielfachen von 275 nm, auf. Als Material kommt dabei vorzugsweise Zinnoxid ($SnO_2$) zum Einsatz. Durch eine derartige Ausgestaltung ist sichergestellt, dass die dielektrischen Schichten die optischen Eigenschaften des Schichtsystems und insbesondere die Farbgebung nicht wesentlich beeinflussen.

Vorteilhafterweise ist der Rückblickspiegel gezielt für eine besonders gering gehaltene Blendwirkung nachfolgender Fahrzeuge (mit unterschiedlichen Scheinwerferaufbauten), insbesondere bei Dunkelheit, ausgelegt. Dazu weist die Reflexionsschicht vorteilhafterweise ein spektrales Reflexionsverhalten auf, das bei Nachtfahrten gegenüber der Betrachtung mit helladaptiertem Auge eine relative Abnahme der Reflexionswerte bei den Lichtarten A und C um mindestens 10 %, bevorzugt um mindestens 20 %, zeigt. Mit anderen Worten: das Verhältnis der Reflexionswerte bei dunkeladaptiertem Auge zu den Reflexionswerten bei helladaptiertem Auge, jeweils für die Lichtarten A und C, beträgt vorteilhafterweise höchstens 90 %, vorzugsweise höchstens 80 %.

Die Lichtarten C und A spezifizieren dabei ein typisches Spektrum bei Tageslicht (Lichtart C) und bei Nacht (Lichtart A). Die integralen Reflexionswerte für "photopisches Sehen" und "skotopisches Sehen" können dabei entsprechend der jeweiligen Augenempfindlichkeitskurven gemäß CIE 1951 ermittelt werden. Die Bezeichnungen A und C symbolisieren die dazugehörigen Lichtarten (nach CIE 1971). Das genannte Verhältnis der Reflexionswerte M* ist das größere der beiden Verhältnisse Reflexion (Lichtart A, skotopisch) / Reflexion (Lichtart A, photopisch) und Reflexion (Lichtart C, skotopisch) / Reflexion (Lichtart C, photopisch) und spiegelt die Blendarmut des Spiegels wieder. Liegt der Wert unter 1, ist für beide genormten Lichtarten A und C eine reduzierte Reflexion bei skotopischem Sehen wahrnehmbar.

Besonders hochwertige Reflexionseigenschaften sind erreichbar, indem die reflektierende Spiegelschicht in vorteilhafter Ausgestaltung aus Silber (Ag), Aluminium (Al), Chrom (Cr), Nickel (Ni), Titan (Ti) oder einer Legierung aus diesen Metallen gebildet ist. In besonders vorteilhafter Ausgestaltung ist Silber als Material für die reflektierende Spiegelschicht gewählt.

Des weiteren hat sich herausgestellt, dass durch Absorption in der Halbleiterschicht die erreichbare Reflexionshöhe verringert sein kann. Um dem entgegenzuwirken und die Reflexion zu erhöhen, kann die halbleitende Schicht vorzugsweise vergleichsweise dünner und die dielektrische Schicht vergleichsweise dicker ausgeführt sein, wobei sich dadurch die Winkelabhängigkeit wiederum erhöht.

Für besonders hochwertige und homogene Schichteigenschaften ist die Zwischenschicht in vorteilhafter Ausgestaltung durch Kathodenzerstäubung, insbesondere im Vakuum und/oder in einer Ar-Atmosphäre, auf den Schichtträger aufgebracht. Als Schichtträger ist in vorteilhafter Ausgestaltung ein Natron-Silikatglas vorgesehen, aufgrund dessen Transmissivität besonders günstige optische Eigenschaften für den Spiegel insgesamt erreichbar sind.

Vorteilhafterweise ist die Zwischenschicht amorph. Die Beschichtung ist vorteilhafterweise rückseitig auf dem Schichtträger aufgebracht, so dass sie durch den Schichtträger vor Beschädigungen oder sonstigen schädlichen Auswirkungen von außen geschützt ist. In weiterer vorteilhafter Ausgestaltung ist der Schichtträger dabei vorderseitig mit einer hydrophilen und/oder photokatalytisch aktiven Beschichtung versehen, wie sie beispielsweise aus der EP 0 689 962 bekannt ist.

Die mit der Erfindung erzielten Vorteile bestehen insbesondere darin, dass durch die spezifische Auslegung des Rückblickspiegels auf eine eher grüne oder rote Farbtönung, also mit einem Betrag des Farbwertes a gemäß CIE von mehr als 5, einerseits im Hinblick auf Designzwecke eine gewünschte Farbgebung eingehalten und/oder andererseits auch bei modernen Beleuchtungssystemen für Kraftfahrzeuge bei Nachtfahrten eine Blendung des Fahrers besonders gering gehalten werden kann. Durch die zusätzlich vorgesehene Auslegung dafür, dass die bei einer Winkeländerung des Einfallswinkels resultierende Farbänderung ΔE auf vergleichsweise geringe Werte limitiert bleibt, ist zudem sichergestellt, dass auch unter verschiedenen Blickwinkeln die erwünschte Farbgebung erhalten bleibt bzw. in verschiedenartigen betrieblichen Situationen des Kraftfahrzeugs eine Blendung des Fahrers besonders sicher vermieden ist. Durch die Verwendung von Halbleitermaterialien als Zwischenschicht zwischen dem Schichtträger und der reflektierenden Spiegelschicht sind die optischen Eigenschaften des Spiegels besonders variabel und mit großen Bandbreiten einstellbar, wobei insbesondere dadurch die vorgesehene Auslegung der Farbtönung und der Farbänderung erreichbar ist. Der Spiegel eignet sich somit vorzugsweise auch für Anwendungen, in denen aus Designgründen eine bestimmte Farbgebung gewünscht ist.

Ein Ausführungsbeispiel der Erfindung wird anhand einer Zeichnung näher erläutert. Darin zeigen:

Figur 1    schematisch im Ausschnitt einen Rückblickspiegel für Kraftfahr- zeuge,

Figur 2    ein Diagramm mit einer Reflexionskurve eines Rückblickspiegels nach dem Stand der Technik,

Figur 3    ein Diagramm mit Wertepaaren a, ΔE, und

Figur 4    ein Diagramm mit einer Reflexionskurve eines Rückblickspiegels.

Gleiche Teile sind in allen Figuren mit den selben Bezugszeichen versehen.

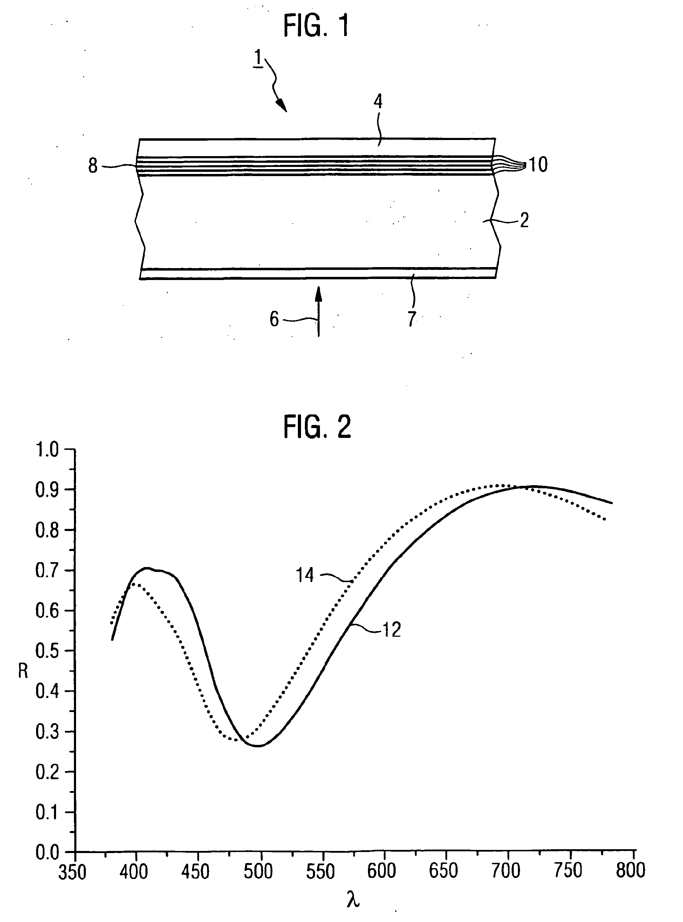

Der in Figur 1 ausschnittsweise im Querschnitt gezeigte Rückblickspiegel 1 ist zum Einsatz in einem Kraftfahrzeug vorgesehen. Er umfasst einen Schichtträger 2, der im Ausführungsbeispiel transparent und aus Natron-Silikatglas ausgeführt ist. Um die spiegelnden Eigenschaften sicherzustellen, ist eine reflektierende Spiegelschicht 4 aus einem geeignet gewählten Metall oder Halbleitermaterial vorgesehen. Im Ausführungsbeispiel ist dazu Silber (Ag) gewählt; alternativ könnte aber auch ein anderes geeignetes reflektierendes Material wie insbesondere Aluminium, Chrom, Nickel, Titan oder eine Legierung aus diesen Materialien vorgesehen sein. Um die Spiegelschicht 4 vor Beschädigungen oder Beeinträchtigungen durch direkte atmosphärische Einwirkung, Verschmutzungen oder dergleichen zu schützen, ist die Beschichtung rückseitig, also auf der von der durch den Pfeil 6 angedeuteten Blickrichtung oder Einfallsrichtung des Lichts abgewandten Seite des Schichtträgers 2, angebracht. Vorderseitig ist der Schichtträger 2 mit einer hydrophilen und/oder photokatalytisch aktiven Beschichtung 7 versehen.

Der Rückblickspiegel 1 ist zur Einhaltung spezifisch vorgegebener optischer Parameter geeignet ausgelegt. Dazu umfasst die auf dem Schichtträger 2 angebrachte Beschichtung zusätzlich zur reflektierenden Spiegelschicht 4 eine Zwischenschicht 8, die zwischen der Spiegelschicht 4 und dem Schichtträger 2 angeordnet ist. Die Zwischenschicht 8 ist ihrerseits mehrschichtig aufgebaut und umfasst eine Anzahl von Einzelschichten 10.

Zur Erläuterung der besonderen optischen Eigenschaften des Rückblickspiegels 1 soll im folgenden auf sogenannte Reflexionskurven zurückgegriffen werden, wie sie beispielhaft in Figur 2 für einen aus dem Stand der Technik bekannten Rückblickspiegel dargestellt sind. Im Diagramm nach Figur 2 ist dazu als funktionale Abhängigkeit auf der x-Achse die Wellenlänge λ des auf den Rückblickspiegel einfallenden Lichts in Nanometern abgetragen. Auf der y-Achse ist der Reflexionsgrad R, der Anteil des reflektierten Lichts, abgetragen. In Figur 2 sind dabei die entsprechenden Messwerte für einen rotflektierenden Spiegel dargestellt, der mit einem Interferenzschichtsystem und einem Metallreflektor nach aus dem Stand der Technik bekannten Methoden hergestellt wurde. Dieser Rückblickspiegel umfasst als Schichtträger ein Floatglas in einer Dicke von 2 mm, auf dem eine Schicht aus Nickel-Chrom (NiCr) mit einer Schichtdicke vom 3,3 nm und darüber liegend eine dielektrische Schicht aus Zinksulfid (ZnS) mit einer Schichtdicke von 134 nm aufgebracht sind. Über letzterer ist als metallische Spiegelschicht eine Silberschicht mit einer Schichtdicke von 100 nm aufgebracht. Für diesen Spiegel ist in Figur 2 mit der durchgezogenen Kurve 12 die Wellenlängenabhängigkeit des Reflexionsgrades R bei senkrechtem Lichteinfall, also bei einem Einfallswinkel 0°, dargestellt. Im Vergleich dazu ist in der gepunkteten Linie 14 die Wellenlängenabhängigkeit des Reflexionsgrades R für diesen Spiegel bei einem um 45° verkippten Lichteinfall, also mit einem Einfallswinkel von 45°, gezeigt. Wie dem Diagramm in Figur 2 ohne weiteres entnehmbar ist, differieren die Kurven 12 und 14 erheblich voneinander. Damit unterscheidet sich das Reflexionsverhalten des dort dargestellten Spiegels bei einem um 45° verkippten Lichteinfall erheblich vom senkrechten Lichteinfall, so dass sowohl Farbwirkung als auch Blendreduktion erheblich vom Einfallswinkel des Lichts abhängen. Hierdurch ist dokumentiert, dass sich der dort repräsentativ abgebildete Spiegel nur begrenzt zum Einsatz in Kraftfahrzeugen eignet, bei denen auf Vermeidung einer Blendung des Fahrers in besonderem Maße geachtet werden soll.

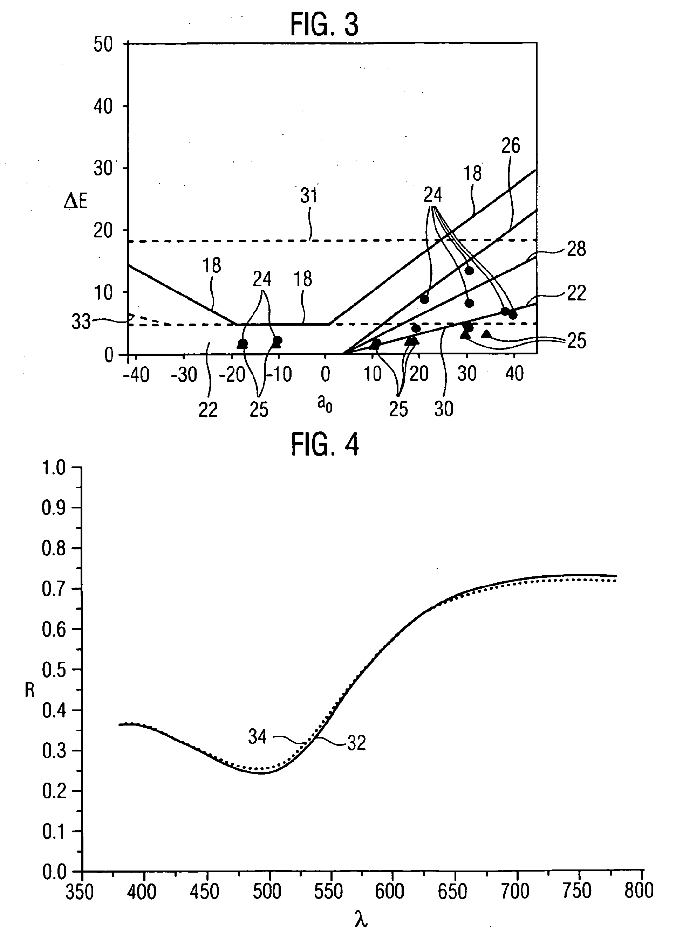

Derartige Messergebnisse sind im Diagramm nach Figur 3 für eine Vielzahl von Rückblickspiegeln zusammengefasst. Beim dort dargestellten Diagramm ist auf der x-Achse der Farbwert $a_0$ gemäß CIE aufgetragen. Auf der y-Achse ist die infolge eines Verkippens des Rückblickspiegels vom senkrechten Beobachtungswinkel um 45° resultierende Farbänderung ΔE abgetragen. Die Farbänderung ΔE wird dabei ermittelt aus der Beziehung

$$\Delta E = \sqrt{\Delta L^2 + \Delta a^2 + \Delta b^2}$$

, wobei L, a und b die Farbkoordinaten im CIE-Lab-Farbraum repräsentieren. Die Farbkoordinaten werden dabei bei senkrechtem Lichteinfall ($L_0$, $a_0$ $b_0$) und unter 45° $L_{45}$, $a_{45}$, $b_{45}$ gemessen. Aus diesen Messwerten werden die Differenzbeträge ermittelt nach den Beziehungen $\Delta L = L_{45} - L_o$, $\Delta a = a_{45} - a_0$ und $b_{45} - b_0$. Aus diesen Differenzwerten kann wiederum die Farbänderung $\Delta E$ nach der genannten Beziehung ermittelt werden. Die im Diagramm nach Figur 3 wiedergegebenen Symbole charakterisieren dabei eine Vielzahl von Rückblickspiegeln nach den jeweils relevanten Parametern.

Um den erhöhten Anforderungen an eine stabile Farbgebung auch unter verschiedenen Betrachtungswinkeln oder an eine zuverlässige Blendarmut auch im Hinblick auf moderne Kfz-Beleuchtungssysteme und variierende Einfallswinkel gerecht zu werden, ist der in Figur 1 schematisch dargestellte, erfindungsgemäße Rückblickspiegel 1 in besonderem Maße dafür ausgelegt, dass die infolge eines Verkippens des Rückspiegels vom senkrechten Betrachtungswinkel um 45° resultierende Farbänderung $\Delta E$ in Abhängigkeit vom Betrag des Farbwertes a gemäß CIE nicht größer ist als

$\Delta E \leq 1/2 \cdot (|a_0|-8)$ für $a_0 \leq -20$,

$\Delta E \leq 6$ für $-20 \leq a_0 \leq 0$, und

$\Delta E \leq 1/2 \cdot (a_0 + 12)$ für $a_0 \geq 0$.

Die durch dieses Auslegungskriterium gegebene äußere Grenzlinie ist durch die aus drei Geradenteilstücken zusammengesetzte Linie 18 in Figur 3 wiedergegeben. Im Diagramm nach Figur 3 ist der Rückblickspiegel 1 gemäß Figur 1 somit dadurch charakterisiert, dass das ihm entsprechende Wertepaar $\Delta E$, a im durch die Linie 18 begrenzten Bereich 22 liegt. Im Diagramm nach Figur 3 sind dabei einige Wertepaare für erfindungsgemäß hergestellte Rückblickspiegel eingezeichnet, wobei die Kreise 24 Hybridspiegel mit einer Kombination aus einer Halbleiterschicht und einer dielektrischen Schicht und die Dreiecke 25 Rückblickspiegel mit lediglich einer Halbleiterschicht repräsentieren.

Vorteilhafterweise ist der Rückblickspiegel 1 darüber hinaus gehend derart ausgestaltet, dass

$\Delta E \leq 1/2 \cdot (a_0 - 3)$, vorteilhafterweise $\leq 1/3 \cdot (a_0 - 3)$, vorzugsweise $\leq 1/6 \cdot (a_0 - 3)$, für $a_0 \geq 3$ ist.

Die Grenzlinien für diese Bereiche sind im Diagramm nach Fig. 3 durch die Geraden 26, 27, 28, 30 wiedergegeben.

Darüber hinaus ist der Rückblickspiegel 1 derart ausgelegt, dass in jedem Fall $\Delta E$ nicht größer ist als 18, vorzugsweise kleiner ist als 6. Die Grenzlinie für den erst genannten Bereich ist in Fig. 3 durch die strichlierte Gerade 31 wiedergegeben, für den zweit genannten Bereich durch die strichlierte Gerade 33.

Um die genannten Kennwerte einhalten zu können, ist die Zwischenschicht 10 des Rückblickspiegels 1 aus Halbleitermaterial gebildet. Dabei kann insbesondere Silizium (Si), Germanium (Ge) oder eine Mischung aus Silizium und Germanium vorgesehen sein. Des Weiteren kann je nach den Erfordernissen der optischen Eigenschaften das Halbleitermaterial mit Stickstoff (N), Wasserstoff (H) und/oder Sauerstoff (O) versetzt sein. Des Weiteren kann je nach optischen Erfordernissen, wie im Ausführungsbeispiel nach Figur 1 dargestellt, eine Mehrzahl einzelner Schichten 10 aus verschiedenen Halbleitermaterialien vorgesehen sein, die im Bedarfsfall auch durch weitere dielektrische Schichten ergänzt sein können.

Im Ausführungsbeispiel ist der Schichtträger 2 des Rückblickspiegels 1 ein FloatGlas mit einer Dicke von 2 mm. Auf diesem ist als Zwischenschicht 8 eine Schicht aus amorphem-Silizium (a-Si) aufgebracht. Sowohl die Zwischenschicht 8 als auch die darauf angeordnete reflektierende Spiegelschicht 4 sind mittels Kathodenzerstäubung im Vakuum in Ar-Atmosphäre auf den Schichtträger 2 aufgebracht.

Als spezifische Ausführungsbeispiele, für die die relevanten Parameter im Diagramm nach Figur 3 eingezeichnet sind, wurden eine Anzahl von Rückblickspiegeln 1 mit dem dort in Fig. 1 gezeigten Aufbau hergestellt, wobei als Schichtdicken für die Zwischenschicht 8 unter anderem 6,9 nm, 11 nm, 56 nm, 65 nm und 88 nm vorgegeben wurden. Danach wurde die reflektierende Spiegelschicht 4, eine optisch dichte und gut reflektierende Silberschicht mit einer Dicke von 100 nm, aufgesputtert. Dieser Aufbau kann zusätzlich zum Schutz gegen äußere Einflüsse mit Cu weiter beschichtet und danach lackiert werden. Im Diagramm nach Figur 3 sind die dabei erhaltenen Spiegel mit ihren relevanten Kenndaten in Form der Dreiecke 25 eingezeichnet. Dabei ist erkennbar, dass die Dreiecke 25 ausnahmslos im als relevant angesehenen Bereich 22 liegen.

Die genauen Parameterwerte für einige Ausführungsbeispiele derartig hergestellter Rückblickspiegel 1 sind in Tabelle 1 mit einigen Vergleichsbeispielen (gekennzeichnet durch X) zusammengefasst. Dabei sind für jedes Ausführungsbeispiel dessen Typus (HL entspricht dem Schichtaufbau Substrat - Halbleiterschicht - Spiegelschicht, Hybrid entspricht dem Schichtaufbau Substrat Halbleiterschicht - dielektrische Schicht - Spiegelschicht), die Farbtönung, die Schichtdicken der metallischen Absorberschicht dsNiCr, der amorphen Siliziumschicht tatsächlich ds_a-Si und optisch ds_a-Si_opt, der Halbleiterschicht tatsächlich ds_SnO2 und optisch ds_SnO2_opt, das Reflektormaterial, der ermittelte Reflexionsgrad R(A), die Farbkoordinaten bei senkrechtem Lichteinfall ($L_0$, $a_0$, $b_0$), die resultierende Farbänderung $\Delta E$, das Verhältnis M* der Reflexionswerte bei dunkeladaptiertem Auge zu den Reflexionswerten bei helladaptiertem Auge sowie der Farbigkeitsparameter C angegeben.

Tabelle 1

| Lfd. Nr. | Typus | Farbtönung | ds NiCr | ds a-Si | ds a-Si opt | ds SnO2 | ds SnO2 opt | Reflektor | R(A) | a0 | b0 | ΔE | M* | C | |
|---|---|---|---|---|---|---|---|---|---|---|---|---|---|---|---|
| 1 | HL | Rot | - | 56 | 269 | 0 | 0 | Ag | 46% | 18 | 15 | 1.7 | 0.69 | 23.4 | |
| 2 | HL | Rot | - | 65 | 312 | 0 | 0 | Ag | 30% | 30 | -6 | 2.8 | 0.92 | 30.6 | X |
| 3 | HL | rot | - | 11 | 52.8 | 0 | 0 | Ag | 20% | 35 | 8 | 2.9 | 0.53 | 35.9 | X |
| 4 | HL | Rot | - | 6.9 | 33.1 | 0 | 0 | Ag | 51% | 10 | 37 | 1.3 | 0.55 | 38.3 | |
| 5 | HL | Grün | - | 88 | 422 | 0 | 0 | Ag | 27% | -18 | -5 | 1.4 | 1.29 | 18.7 | X |
| 6 | HL | Grün | - | 95 | 456 | 0 | 0 | Ag | 33% | -11 | 2 | 1.5 | 1.06 | 11.2 | X |
| 7 | Hybrid | Grün | - | 89 | 427 | 20 | 20 | Ag | 36% | -10 | 5 | 2.3 | 1.03 | 11.2 | X |
| 8 | Hybrid | Grün | - | 85 | 408 | 10 | 10 | Ag | 28% | -18 | -4 | 1.9 | 1.26 | 18.4 | X |
| 9 | Hybrid | Rot | - | 45 | 216 | 37 | 37 | Ag | 56% | 11 | 26 | 2.1 | 0.66 | 28.2 | |
| 10 | Hybrid | Rot | - | 45 | 216 | 55 | 55 | Ag | 52% | 20 | 25 | 4 | 0.57 | 32.0 | |
| 11 | Hybrid | Rot | - | 45 | 216 | 68 | 68 | Ag | 47% | 31 | 18 | 8.1 | 0.54 | 35.8 | |
| 12 | Hybrid | Rot | - | 51 | 245 | 40 | 40 | Ag | 42% | 30 | 12 | 4.6 | 0.63 | 32.3 | |
| 13 | Hybrid | Rot | - | 51 | 245 | 54 | 54 | Ag | 36% | 38 | 5 | 6.7 | 0.66 | 38.3 | X |
| 14 | Hybrid | Rot | - | 55 | 264 | 21 | 21 | Ag | 38% | 31 | 7 | 4 | 0.70 | 31.8 | X |
| 15 | Hybrid | Rot | - | 55 | 264 | 44 | 44 | Ag | 29% | 40 | -7 | 6.1 | 0.85 | 40.6 | X |
| 16 | Hybrid | Rot | - | 40 | 192 | 76 | 76 | Ag | 58% | 21 | 26 | 8.8 | 0.55 | 33.4 | |
| 17 | Hybrid | Rot | - | 40 | 192 | 82 | 82 | Ag | 54% | 3.1 | 18 | 13. | 0.53 | 35.8 | |
| 18 | Hybrid | Rot | - | 54 | 140 | 116 | 230 | Ag | 63% | 21 | 9.2 | 11 | 0.81 | 22.8 | |
| 19 | Hybrid | rot-gelb | - | 52 | 231 | 40 | 80 | Ag | 48% | 23 | 22 | 3.8 | 0.56 | 32.2 | |
| 20 | Hybrid | Rot | - | 58 | 173 | 110 | 219 | Ag | 47% | 28 | 5.5 | 9.7 | 0.84 | 28.8 | |
| 21 | Hybrid | Rot | - | 64 | 173 | 105 | 209 | Ag | 57% | 23 | 11 | 8.9 | 0.78 | 25.8 | |
| 22 | Hybrid | Gelb | - | 39 | 173 | 75 | 149 | Ag | 68% | 2.1 | 39 | 3.9 | 0.65 | 39.0 | |
| 23 | Hybrid | Gelb | - | 51 | 228 | 37 | 74 | Cr | 50% | 9.2 | 25 | 2.4 | 0.66 | 26.5 | |
| 24 | Hybrid | Rot | - | 54 | 173 | 100 | 199 | Ag | 50% | 40 | 13 | 17 | 0.61 | 42.4 | |
| 25 | Hybrid | gelb-rot | - | 58 | 173 | 90 | 179 | Ag | 62% | 22 | 28 | 16 | 0.53 | 36.2 | |

EP 2 279 909 B1

(fortgesetzt)

| Lfd. Nr. | Typus | Farbtönung | ds NiCr | ds a-Si | ds a-Si opt | ds SnO2 | ds SnO2 opt | Reflektor | R(A) | a0 | b0 | ΔE | M* | C | |
|---|---|---|---|---|---|---|---|---|---|---|---|---|---|---|---|
| 26 | Hybrid | Rot | - | 64 | 173 | 115 | 229 | Ag | 53% | 15 | 7 | 10 | 0.91 | 16.2 | X |
| 27 | Hybrid | gelb-rot | - | 71 | 173 | 95 | 189 | Ag | 71% | 12 | 18 | 9.5 | 0.76 | 21.7 | |
| 28 | Hybrid | rot-gelb | - | 71 | 173 | 105 | 209 | Ag | 66% | 13 | 11 | 6.5 | 0.84 | 17.4 | |
| 29 | Hybrid | rot-gelb | - | 58 | 173 | 95 | 189 | Ag | 58% | 29 | 22 | 15.9 | 0.57 | 36.1 | |
| 30 | Hybrid | Rot | - | 58 | 173 | 235 | 468 | Ag | 59% | 28 | 16 | 14.2 | 0.70 | 32.3 | |
| 31 | SdT | Blau | 3.0 | - | - | 80 | 159 | Ag | 48% | -7 | -29 | 8.2 | 1.38 | 29.6 | X |
| 32 | SdT | Grün | 3.0 | - | - | 97 | 193 | Ag | 72% | -16 | -3 | 10.7 | 1.17 | 16.8 | X |
| 33 | SdT | gelb-grün | 3.0 | - | - | 112 | 224 | Ag | 86% | -15 | 18 | 9.4 | 0.98 | 23.2 | X |
| 34 | SdT | Gelb | 3.0 | - | - | 128 | 255 | Ag | 86% | -8 | 31 | 7.7 | 0.83 | 32.2 | X |
| 35 | SdT | Gelb | 3.0 | - | - | 144 | 286 | Ag | 75% | 3 | 33 | 8.8 | 0.72 | 32.8 | X |
| 36 | SdT | rot-gelb | 3.0 | - | - | 160 | 318 | Ag | 58% | 20 | 14 | 19.8 | 0.70 | 24.8 | X |
| 37 | SdT | Rot | 3.0 | - | - | 174 | 346 | Ag | 44% | 35 | -18 | 29.2 | 0.94 | 38.9 | X |
| (X = Vergleichsbeispiel) | | | | | | | | | | | | | | | |

Derjenige Rückblickspiegel 1, der mit einer Schichtdicke der Zwischenschicht 8 von 56 nm hergestellt wurde, ist beispielsweise im Ergebnis ein rot reflektierender Spiegel, dessen Farbwert $a_0$ gemäß CIE 18 beträgt. Der für diesen Spiegel ermittelte Wert für die Farbänderung $\Delta E$ infolge des Verkippens um 45° beträgt lediglich 1,7. Der alternativ hergestellte Spiegel mit einer Dicke der Zwischenschicht 8 von 88 nm ist ein grün reflektierender Spiegel mit einem Farbwert $a_0$ gemäß CIE -18, für den die ermittelte Farbänderung $\Delta E$ ebenfalls sehr gering ist und einen Wert von lediglich 1,4 ergibt.

Die dabei erhaltenen guten optischen Eigenschaften sind für den Rückblickspiegel 1, dessen Dicke der Zwischenschicht 8 56 nm beträgt, in Form der Reflexionskurve in Figur 4 dargestellt. Dort ist ebenfalls der Reflexionsgrad R als Funktion der Wellenlänge $\lambda$ abgetragen, wobei die durchgezogene Kurve 26 das Ergebnis für senkrechten Lichteinfall und die gepunktete Kurve 28 das Ergebnis bei um 45° verkipptem Lichteinfall wiedergibt. Wie der Darstellung nach Figur 4 ohne weiteres entnehmbar ist, unterscheiden sich die Kurven 32 und 34 kaum voneinander; der Rückblickspiegel 1 weist somit unabhängig vom Einfallswinkel des Lichts nahezu unveränderte optische Eigenschaften auf.

Bezugszeichenliste

| | |
|---|---|
| 1 | Rückblickspiegel |
| 2 | Schichtträger |
| 4 | Spiegelschicht |
| 6 | Pfeil |
| 7 | Beschichtung |
| 8 | Zwischenschicht |
| 10 | Einzelschicht |
| 12 | durchgezogene Kurve |
| 14 | gepunktete Linie |
| 18 | Linie |
| 22 | begrenzter Bereich |
| 24 | Kreise |
| 25 | Dreiecke |
| 26, 28, 30, 31 | Geraden |
| 32,34 | Kurven |
| | |
| R | Reflexionsgrad |
| $\lambda$ | Wellenlänge |

**Patentansprüche**

1. Rückblickspiegel (1) für Kraftfahrzeuge mit einem Schichtträger (2) und einer darauf rückseitig angebrachten Beschichtung, die eine reflektierende Spiegelschicht (4) und eine zwischen dieser und dem Schichtträger (2) angeordnete Zwischenschicht (8) umfasst,

   **dadurch gekennzeichnet, dass** der Betrag des Parameters für die Farbigkeit $C = \sqrt{a_0^2 + b_0^2}$ größer ist als 5, dass die infolge eines Verkippens des Rückblickspiegels (1) vom senkrechten Beobachtungswinkel um 45° resultierende Farbänderung $\Delta E$ in Abhängigkeit vom Betrag des Farbwertes $a_0$ gemäss CIE nicht grösser ist als

   $\Delta E \leq 1/2 \cdot (|a_0| - 8)$ für $a_0 \leq -20$,

   $\Delta E \leq 6$ für $-20 \leq a_0 \leq 0$, und

   $\Delta E \leq 1/2 \cdot (a_0 + 12)$ für $a_0 \geq 0$,

   und dass der Reflexionsgrad R(A) bei Lichtart A mindestens 40 % beträgt.

2. Rückblickspiegel nach Anspruch 1, **dadurch gekennzeichnet, dass** für $a_0 \geq 3$ die Farbänderung $\Delta E \leq 1/2 \cdot (a_0 - 3)$, vorzugsweise $\leq 1/3 \cdot (a_0 - 3)$, vorteilhafterweise $\leq 1/6 \cdot (a_0 - 3)$, beträgt.

3. Rückblickspiegel nach Anspruch 1 oder 2, **dadurch gekennzeichnet, dass** der Farbwert $a_0 > 0$ gewählt ist.

4. Rückblickspiegel (1) nach einem der Ansprüche 1 bis 3, **dadurch gekennzeichnet, dass** die Farbänderung $\Delta E$

nicht grösser als 18, vorzugsweise nicht grösser als 6, ist.

5. Rückblickspiegel (1) nach einem der Ansprüche 1 bis 4, **dadurch gekennzeichnet, dass** die Zwischenschicht (8) aus Halbleitermaterial gebildet ist.

6. Rückblickspiegel (1) nach Anspruch 5, **dadurch gekennzeichnet, dass** als Halbleitermaterial Silizium, Germanium oder eine Mischung aus Silizium und Germanium vorgesehen ist.

7. Rückblickspiegel (1) nach Anspruch 5 oder 6, **dadurch gekennzeichnet, dass** das Halbleitermaterial mit Aluminium, Bor, Stickstoff, Wasserstoff und/oder Sauerstoff versetzt ist.

8. Rückblickspiegel (1) nach einem der Ansprüche 5 bis 7, **dadurch gekennzeichnet, dass** das Halbleitermaterial eine optische Schichtdicke von etwa 135 nm bis etwa 240 nm aufweist.

9. Rückblickspiegel (1) nach einem der Ansprüche 5 bis 7, **dadurch gekennzeichnet, dass** das Halbleitermaterial eine optische Schichtdicke von etwa 135 nm bis etwa 240 nm zuzüglich eines ganzzahligen Vielfachen von 275 nm aufweist.

10. Rückblickspiegel (1) nach einem der Ansprüche 5 bis 9, **dadurch gekennzeichnet, dass** die Zwischenschicht (8) ihrerseits mehrschichtig aus einer Anzahl von Halbleiterschichten aufgebaut ist.

11. Rückblickspiegel (1) nach einem der Ansprüche 5 bis 10, **dadurch gekennzeichnet, dass** die Zwischenschicht (8) eine Anzahl dielektrischer Schichten umfasst.

12. Rückblickspiegel (1) nach Anspruch 11, **dadurch gekennzeichnet, dass** die jeweilige dielektrische Schicht aus Zinnoxid ($SnO_2$) gebildet ist.

13. Rückblickspiegel (1) nach Anspruch 11 oder 12, **dadurch gekennzeichnet, dass** die Gesamtheit der dielektrischen Schicht eine optische Schichtdicke von weniger als 240 nm, vorzugsweise von weniger als 160 nm, aufweist.

14. Rückblickspiegel (1) nach Anspruch 11 oder 12, **dadurch gekennzeichnet, dass** die Gesamtheit der dielektrischen Schichten eine optische Schichtdicke von weniger als 240 nm, vorzugsweise von weniger als 160 nm, zuzüglich eines ganzzahligen Vielfachen von 275 nm aufweist.

15. Rückblickspiegel (1) nach einem der Ansprüche 1 bis 14, **dadurch gekennzeichnet, dass** das Verhältnis der Reflexionswerte bei dunkeladaptiertem Auge zu den Reflexionswerten bei helladaptiertem Auge, jeweils für die Lichtarten A und C, höchstens 90 %, vorzugsweise höchstens 80%, beträgt.

16. Rückblickspiegel (1) nach einem der Ansprüche 1 bis 15, **dadurch gekennzeichnet, dass** der Reflexionsgrad R (A) bei Lichtart A höchstens 70 % beträgt.

17. Rückblickspiegel (1) nach einem der Ansprüche 1 bis 16, **dadurch gekennzeichnet, dass** die Spiegelschicht (14) aus Silber, Aluminium, Nickel, Titan, vorzugsweise aus Chrom oder einer Legierung aus diesen Materialien gebildet ist.

18. Rückblicksiegel (1) nach einem der Ansprüche 1 bis 17, **dadurch gekennzeichnet, dass** die Zwischenschicht (8) durch Kathodenzerstäubung auf den Schichtträger (2) aufgebracht ist.

19. Rückblickspiegel (1) nach einem der Ansprüche 1 bis 18, **dadurch gekennzeichnet, dass** als Schichtträger (2) ein Natron-Silikatglas vorgesehen ist.

20. Rückblickspiegel (1) nach einem der Ansprüche 1 bis 19, **dadurch gekennzeichnet, dass** die Zwischenschicht (8) amorph ist.

21. Rückblickspiegel (1) nach einem der Ansprüche 1-20, **dadurch gekennzeichnet, dass** der Schichtträger (2) vorderseitig mit einer hydrophilen und/oder photokatalytisch aktiven Beschichtung versehen ist.

**Claims**

1. A rear view mirror (1) for motor vehicles, having a layer carrier (2) and a coating applied on the back thereof, said coating comprising a reflecting mirror layer (4) and an intermediate layer (8) arranged between the latter and the layer carrier (2), **characterized in that** the amount of the parameter for the chromaticity $C = \sqrt{a_0^2 + b_0^2}$ is larger than 5, **in that** the color change $\Delta E$ resulting from a tilting of the rear view mirror (1) by 45° against the vertical observation angle, as a function of the amount of the color value $a_0$, according to CIE, is not larger than
$\Delta E \leq 1/2 \cdot (|a_0| - 8)$ for $a_0 \leq -20$,
$\Delta E \leq 6$ for $-20 \leq a_0 \leq 0$, and
$\Delta E \leq 1/2 \cdot (a_0 + 12)$ for $a_0 \geq 0$,
and **in that** the reflectance R(A) for illuminant A amounts to at least 40 %.

2. The rear view mirror (1) of claim 1, **characterized in that** for $a_0 \geq 3$, the color change amounts to $\Delta E \leq 1/2 \cdot (a_0 - 3)$, preferably $\Delta E \leq 1/3 \cdot (a_0 - 3)$, advantageously $\Delta E \leq 1/6 \cdot (a_0 - 3)$.

3. The rear view mirror (1) of claim 1 or 2, **characterized in that** the color change is chosen to be $a_0 > 0$.

4. The rear view mirror (1) of any of claims 1 to 3, **characterized in that** the color change $\Delta E$ is not larger than 18, preferably not larger than 6.

5. The rear view mirror (1) of any of claims 1 to 4, **characterized in that** the intermediate layer (8) is made of a semiconducting material.

6. The rear view mirror (1) of claim 5, **characterized in that** the semiconducting material provided is silicon, germanium or a mixture of silicon and germanium.

7. The rear view mirror (1) of claim 5 or 6, **characterized in that** aluminium, boron, nitrogen, hydrogen and/or oxygen are added to the semiconducting material.

8. The rear view mirror (1) of any of claims 5 to 7, **characterized in that** the semiconducting material has an optical layer thickness of approx. 135 nm to approx. 240 nm.

9. The rear view mirror (1) of any of claims 5 to 7, **characterized in that** the semiconducting material has an optical layer thickness of approx. 135 nm to approx. 240 nm, plus an integral multiple of 275 nm.

10. The rear view mirror (1) of any of claims 5 to 9, **characterized in that** the intermediate layer (8), in its turn, has a multi-layer structure consisting of a number of semiconducting layers.

11. The rear view mirror (1) of any of claims 5 to 10, **characterized in that** the intermediate layer (8) comprises a number of dielectric layers.

12. The rear view mirror (1) of claim 11, **characterized in that** the respective dielectric layer is formed of tin oxide ($SnO_2$).

13. The rear view mirror (1) of claim 11 or 12, **characterized in that** the dielectric layer as a whole has an optical layer thickness of less than 240 nm, preferably of less than 160 nm.

14. The rear view mirror (1) of claim 11 or 12, **characterized in that** the dielectric layer as a whole has an optical layer thickness of less than 240 nm, preferably of less than 160 nm, plus an integral multiple of 275 nm.

15. The rear view mirror (1) of any of claims 1 to 14, **characterized in that** the ratio of the reflection values for a dark-adapted eye to the reflection values for a light-adapted eye, in each case for illuminants A and C, amounts to maximally 90 %, preferably to maximally 80 %.

16. The rear view mirror (1) of any of claims 1 to 15, **characterized in that** the reflectance R(A) for illuminant A amounts to maximally 70 %.

17. The rear view mirror (1) of any of claims 1 to 16, **characterized in that** the mirror layer (14) consists of silver, aluminium, nickel, titanium, preferably of chromium, or an alloy of these materials.

**18.** The rear view mirror (1) of any of claims 1 to 17, **characterized in that** the intermediate layer (8) is applied onto the layer carrier (2) through cathode sputtering.

**19.** The rear view mirror (1) of any of claims 1 to 18, **characterized in that** a soda-silica glass is provided as as layer carrier (2).

**20.** The rear view mirror (1) of any of claims 1 to 19, **characterized in that** the intermediate layer (8) is amorphous.

**21.** The rear view mirror (1) of any of claims 1 to 20, **characterized in that** the front of the layer carrier (2) is provided with a hydrophilic and/or photocatalytically active coating.

**Revendications**

**1.** Rétroviseur (1) pour véhicules à moteur, ayant un support de couche (2) et un revêtement déposé sur la face arrière de celui-ci, dit revêtement comprenant une couche de miroir réfléchissante (4) et une couche intermédiaire (8) disposée entre celle-ci et un support de couche (2), **caractérisé en ce que** le montant du paramètre de la chromaticité $C = \sqrt{a_0{}^2 + b_0{}^2}$ est plus grand que 5, **en ce que** la modification chromatique $\Delta E$ résultant d'un basculement du rétroviseur (1) par 45° contre l'angle d'observation vertical, en fonction du montant de la chromaticité $a_0$, selon CIE, n'est pas plus grande que
$\Delta E \leq 1/2 \cdot (|a_0| - 8)$ pour $a_0 \leq -20$,
$\Delta E \leq 6$ pour $-20 \leq a_0 \leq 0$, et
$\Delta E \leq 1/2 \cdot (a_0+ + 12)$ pour $a_0 \geq 0$,
et **en ce que** la réflectance R(A) pour l'illuminant A est au moins 40 %.

**2.** Rétroviseur (1) selon la revendication 1, **caractérisé en ce que**, pour $a_0 \geq 3$, la modification chromatique est $\Delta E \leq 1/2 \cdot (a_0 - 3)$, préférablement $\Delta E \leq 1/3 \cdot (a_0 - 3)$, avantageusement $\Delta E \leq 1/6 \cdot (a_0 - 3)$.

**3.** Rétroviseur (1) selon la revendication 1 ou 2, **caractérisé en ce que** la modification chromatique choisie est $a_0 > 0$.

**4.** Rétroviseur (1) selon l'une quelconque des revendications 1 à 3, **caractérisé en ce que** la modification chromatique $\Delta E$ n'est pas plus grande que 18, préférablement pas plus grande que 6.

**5.** Rétroviseur (1) selon l'une quelconque des revendications 1 à 4, **caractérisé en ce que** la couche intermédiaire (8) est faite d'un matériau semiconducteur.

**6.** Rétroviseur (1) selon la revendication 5, **caractérisé en ce que** le matériau semiconducteur prévu est silicium, germanium ou un mélange de silicium et de germanium.

**7.** Rétroviseur (1) selon la revendication 5 ou 6, **caractérisé en ce** le matériau semiconducteur est mélangé avec de l'aluminium, du bore, de l'azote, de l'hydrogène et/ou de l'oxygène.

**8.** Rétroviseur (1) selon l'une quelconque des revendications 5 à 7, **caractérisé en ce que** le matériau semiconducteur a une épaisseur de couche optique d'environ 135 nm à environ 240 nm.

**9.** Rétroviseur (1) selon l'une quelconque des revendications 5 à 7, **caractérisé en ce que** le matériau semiconducteur a une épaisseur de couche optique d'environ 135 nm à environ 240 nm, plus un multiple entier de 275 nm.

**10.** Rétroviseur (1) selon l'une quelconque des revendications 5 à 9, **caractérisé en ce que** la couche intermédiaire (8), à son tour, a une structure multicouche, consistant en un nombre de couches semiconductrices.

**11.** Rétroviseur (1) selon l'une quelconque des revendications 5 à 10, **caractérisé en ce que** la couche intermédiaire (8) comprend un nombre de couches diélectriques.

**12.** Rétroviseur (1) selon la revendication 11, **caractérisé en ce que** la couche diélectrique respective consiste en oxyde d'étain ($SnO_2$).

**13.** Rétroviseur (1) selon la revendication 11 ou 12, **caractérisé en ce que** la couche diélectrique au total a une épaisseur de couche optique de moins de 240 nm, préférablement de moins de 160 nm.

14. Rétroviseur (1) selon la revendication 11 ou 12, **caractérisé en ce que** la couche diélectrique au total a une épaisseur de couche optique de moins de 240 nm, préférablement de moins de 160 nm, plus un multiple entier de 275 nm.

15. Rétroviseur (1) selon l'une quelconque des revendications 1 à 14, **caractérisé en ce que** le rapport des valeurs de réflexion pour l'oeil adapté à l'obscurité aux valeurs de réflexion pour l'oeil adapté à la lumiére, pour les illuminants A et C à chaque fois, est au maximum 90 %, préférablement au maximum 80 %.

16. Rétroviseur (1) selon l'une quelconque des revendications 1 à 15, **caractérisé en ce que** la réflectance R(A) pour l'illuminant A est au maximum 70 %.

17. Rétroviseur (1) selon l'une quelconque des revendications 1 à 16, **caractérisé en ce que** la couche de miroir (14) consiste en argent, aluminium, nickel, titane, préférablement en chrome, ou en un alliage de ces matériaux.

18. Rétroviseur (1) selon l'une quelconque des revendications 1 à 17, **caractérisé en ce que** la couche intermédiaire (8) est disposée sur un support de couche (2) par pulvérisation cathodique.

19. Rétroviseur (1) selon l'une quelconque des revendications 1 à 18, **caractérisé en ce qu'**un verre de silicate à base de soude est prévu comme support de couche (2).

20. Rétroviseur (1) selon l'une quelconque des revendications 1 à 19, **caractérisé en ce que** la couche intermédiaire (8) est amorphe.

21. Rétroviseur (1) selon l'une quelconque des revendications 1 à 20, **caractérisé en ce que** la face du support de couche (2) est muni d'un revêtement hydrophile et/ou photocatalytiquement actif.

## FIG. 1

## FIG. 2

## FIG. 3

## FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3436011 C1
- EP 0689962 A